# EUROPEAN PATENT APPLICATION

(11) **EP 4 708 863 A1**
(43) Date of publication of application: **11.03.2026**
(21) Application number: 24797422.3
(22) Date of filing: 25.04.2024
(51) Int. Cl.: H04N 19/597, H04N 19/176, H04N 21/236, H04N 21/434

(54) **MESH DATA TRANSMISSION DEVICE, MESH DATA TRANSMISSION METHOD, MESH DATA RECEPTION DEVICE, AND MESH DATA RECEPTION METHOD**

(30) Priority: 25.04.2023 US 202363461882 P
(71) Applicant: LG Electronics Inc., Yeongdeungpo-gu Seoul 07336 (KR)
(72) Inventor: PARK, Hanje, Seoul 06772 (KR); SUH, Jongyeul, Seoul 06772 (KR)
(74) Representative: Mooser, Sebastian Thomas
(86) International application number: PCT/KR2024/005591
(87) International publication number: WO 2024/225768

(57) **Abstract**

A mesh data transmission method according to embodiments may comprise the steps of: encoding mesh data; and transmitting a bitstream including the mesh data. A mesh data reception method according to embodiments may comprise the steps of: receiving a bitstream including mesh data; and decoding the mesh data.

## Description

### [Technical Field]

Embodiments provide a method for providing point cloud content to provide a user with various services such as virtual reality (VR), augmented reality (AR), mixed reality (MR), and self-driving services.

### [Background Art]

A point cloud is a set of points in a three-dimensional (3D) space. It is difficult to generate point cloud data because the number of points in the 3D space is large.

A large throughput is required to transmit and receive data of a point cloud.

### [Disclosure]

### [Technical Problem]

An object of the present disclosure devised to solve the above-described problems is to provide a point cloud data transmission device, a point cloud data transmission method, a point cloud data reception device, and a point cloud data reception method for efficiently transmitting and receiving a point cloud.

Another object of the present disclosure is to provide a point cloud data transmission device, a point cloud data transmission method, a point cloud data reception device, and a point cloud data reception method for addressing latency and encoding/decoding complexity.

Embodiments are not limited to the above-described objects, and the scope of the embodiments may be extended to other objects that can be inferred by those skilled in the art based on the entire contents of the present disclosure.

### [Technical Solution]

To achieve these objects and other advantages, a method of transmitting mesh data according to embodiments may include encoding mesh data, and transmitting a bitstream containing the mesh data. A method of receiving mesh data according to embodiments may include receiving a bitstream containing mesh data, and decoding the mesh data.

### [Advantageous Effects]

The point cloud data transmission method, the point cloud data transmission device, the point cloud data reception method, and the reception device according to embodiments may provide a quality point cloud service.

The point cloud data transmission method, point cloud data transmission device, point cloud data reception method, and point cloud data reception device according to embodiments may achieve various video codec methods.

The point cloud data transmission method, point cloud data transmission device, point cloud data reception method, and point cloud data reception device according to embodiments may provide universal point cloud content such as an autonomous driving service.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:
FIG. 1 illustrates a system for providing dynamic mesh content according to embodiments;
FIG. 2 illustrates a V-MESH compression method according to embodiments;
FIG. 3 illustrates pre-processing in V-MESH compression according to embodiments;
FIG. 4 illustrates a mid-edge subdivision method according to embodiments;
FIG. 5 illustrates a displacement generation process according to embodiments;
FIG. 6 illustrates an intra-frame encoding process in a V-MESH compression method according to embodiments;
FIG. 7 illustrates an inter-frame encoding process for V-MESH data according to embodiments;
FIG. 8 illustrates a lifting transform process for displacements according to embodiments;
FIG. 9 illustrates a process of packing transform coefficients into a 2D image according to embodiments;
FIG. 10 illustrates an attribute transfer process in a V-MESH compression method according to embodiments;
FIG. 11 illustrates an intra-frame decoding process in a V-MESH compression method according to embodiments;
FIG. 12 illustrates V-MESH compression inter frame decoding process according to embodiments;
FIG. 13 illustrates a point cloud data transmission device according to embodiments;
FIG. 14 illustrates a point cloud data reception device according to embodiments;
FIG. 15 illustrates an encoding method for the V-Mesh compression method according to embodiments.
FIG. 16 illustrates tiles according to embodiments;
FIG. 17 illustrates tile-based packing of displacement information according to embodiments;
FIGS. 18 and 19 illustrate syntax of tile-related parameter information according to embodiments;
FIG. 20 illustrates a mesh data encoding method according to embodiments; and
FIG. 21 illustrates a mesh data decoding method according to embodiments.

### [Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

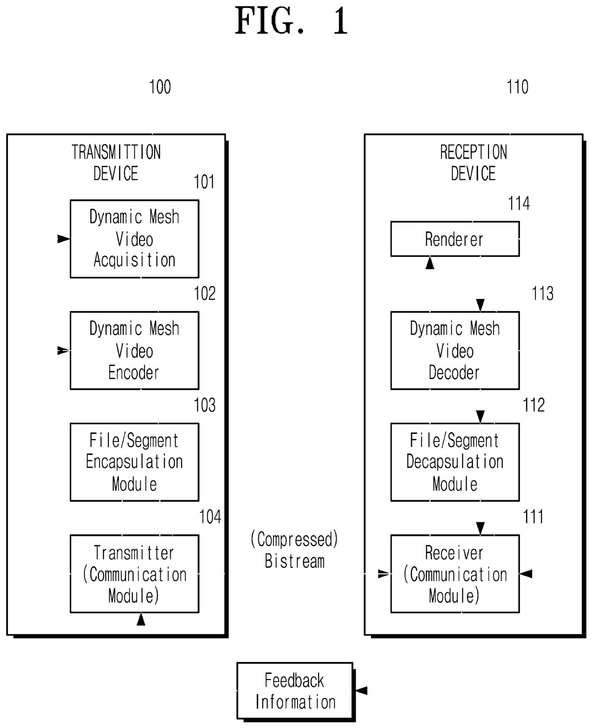

FIG. 1 illustrates a system for providing dynamic mesh content according to embodiments.

The system in FIG. 1 includes a point cloud data transmission device 100 and a point cloud data reception device 110. The point cloud data transmission device may include a dynamic mesh video acquisition unit (or part) 101, a dynamic mesh video encoder 102, a file/segment encapsulator 103, and a transmitter 104. The point cloud data reception device 110 may include a receiver 111, a file/segment decapsulator 112, a dynamic mesh video decoder 113, and a renderer 114. Each component in FIG. 1 may correspond to hardware, software, a processor, and/or a combination thereof. In the following description, a point cloud data transmission device according to embodiments may be interpreted as referring to the transmission device 100 or the dynamic mesh video encoder (hereinafter, encoder) 102. A point cloud data reception device according to embodiments may be interpreted as referring to the reception device 110 or the dynamic mesh video decoder (hereinafter, decoder) 113.

The system of FIG. 1 may perform video-based dynamic mesh compression and decompression.

With advancements in 3D capture, modeling, and rendering, users are allowed to access 3D content in various forms, such as AR, XR, metaverse, and holograms, across multiple platforms and devices. 3D content is increasingly becoming sophisticated and realistic in its representation of objects to provide immersive experiences for users. However, this requires a substantial amount of data for generation and use of 3D models. Among the various types of 3D content, 3D meshes are widely used for efficient data utilization and realistic object representation. Embodiments include a series of processing steps in a system that uses mesh content.

First, the method of compressing dynamic mesh data starts with the Video-based point cloud compression (V-PCC) standard technique. Point cloud data is data that has color information in the coordinates (X, Y, Z) of vertices. Mesh data refers to vertex information including inter-vertex connectivity information. Content may be originally created in the form of mesh data. Connectivity information may be added to point cloud data, and the point cloud data may be transformed into mesh data.

Currently, the MPEG standards group defines two data types for dynamic mesh data: Category 1 of mesh data having a texture map as color information, and Category 2 of mesh data having vertex colors as color information.

Mesh coding standards for Category 1 data are currently underway, and standardization for Category 2 data is expected to follow. The overall process for providing a mesh content service may include acquisition, encoding, transmission, decoding, rendering, and/or feedback processes, as shown in FIG. 1.

To provide mesh content services, 3D data acquired through multiple cameras or special cameras may be processed into a mesh data type through a series of steps to generate a video. The generated mesh video may be transmitted through a series of operations, and the receiving side may process the received data back into a mesh video for rendering. Through this process, the mesh video may be provided to the user, allowing the user to utilize the mesh content interactively according to their intent.

A mesh compression system may include a transmission device and a reception device. The transmission device may encode the mesh video to output a bitstream, which may be delivered to the reception device over a digital storage medium or a network in the form of file or streaming (streaming segments). The digital storage medium may include various storage media such as USB, SD, CD, DVD, Blu-ray, HDD, and SSD.

The transmission device may schematically include a mesh video acquisition unit, a mesh video encoder, and a transmitter. The reception device may schematically include a receiver, a mesh video decoder, and a renderer. The encoder may be referred to as a mesh video/image/picture/frame encoding device. The decoder may be referred to as a mesh video/image/picture/frame decoding device. A transmitter may be included in the mesh video encoder, and a receiver may be included in the mesh video decoder. The renderer may include a display, and the renderer and/or display may be configured as separate devices or external components. The transmission device and reception device may further include separate internal or external modules/units/components for the feedback process.

Mesh data represents the surface of an object using multiple polygons. Each polygon is defined by vertices in 3D space and connectivity information indicating how the vertices are connected. Additionally, vertex attributes such as color and normal vectors may be included in the data. Mapping information, which allows the surface of the mesh to be mapped onto a 2D plane, may also be included in the attributes of the mesh. The mapping is generally described using a set of parametric coordinates related to the vertices of the mesh, referred to as UV coordinates or texture coordinates. A mesh contains a 2D attribute map, which may be used to store high-resolution attribute information such as texture, normal, and displacement.

The mesh video acquisition unit may include processing 3D object data acquired through a camera or the like into a mesh data type having the attributes described above through a series of operations and generating a video composed of the mesh data. In the mesh video, the attributes of the mesh, such as vertices, polygons, connectivity between vertices, color, and normal, may change over time. A mesh video with attributes and connectivity information that change over time is referred to as a dynamic mesh video.

The mesh video encoder may encode an input mesh video into one or more video streams. A video may contain multiple frames, each of which may correspond to a still image/picture. In the present disclosure, the mesh video may include mesh images/frames/pictures. The term "mesh video" may be used interchangeably with mesh images/frames/pictures. The mesh video encoder may perform a Video-based Dynamic Mesh (V-Mesh) compression procedure. For compression and coding efficiency, the mesh video encoder may perform a series of procedures such as prediction, transformation, quantization, and entropy coding. Encoded data (encoded video/image information) may be output in the form of a bitstream.

The encapsulation processor (file/segment encapsulation module) may encapsulate encoded mesh video data and/or mesh video-related metadata in the form of a file or the like. The mesh video-related metadata may be received from a metadata processor. The metadata processor may be included in the mesh video encoder, or may be configured as a separate component/module. The encapsulation processor may encapsulate the data into a file format such as ISOBMFF or process the same into forms such as DASH segments. According to embodiments, the encapsulation processor may include the mesh video-related metadata in the file format. For example, the mesh video metadata may be included in boxes at various levels in the ISOBMFF file format, or as data on separate tracks in the file. In some embodiments, the encapsulation processor may encapsulate the mesh video-related metadata into a file.

The transmission processor may apply processing to the encapsulated mesh video data for transmission based on the file format. The transmission processor may be included in the transmitter or implemented as a separate component/module. The transmission processor may process the mesh video data according to any transmission protocol. The processing for transmission may include processing for delivery over a broadcast network and processing for delivery over a broadband. In some embodiments, the transmission processor may receive mesh video-related metadata from the metadata processor, as well as the mesh video data, and process the same for transmission.

The transmitter may transmit the encoded video/image information or data output in bitstream form to the receiver of the reception device over a digital storage medium or network in the form of a file or streaming. The digital storage medium may include various storage media such as USB, SD, CD, DVD, Blu-ray, HDD, and SSD. The transmitter may include an element to generate a media file through a predetermined file format, and may include an element for transmission over a broadcast/communication network. The receiver may extract the bitstream and deliver the same to a decoding device.

The receiver may receive the mesh video data transmitted by the mesh video transmission device. Depending on the channel for transmission, the receiver may receive the mesh video data over a broadcast network or a broadband network, or may receive the mesh video data over a digital storage medium.

The reception processor may perform processing on the received mesh video data according to the transmission protocol. The reception processor may be included in the receiver, or may be configured as a separate component/module. To correspond to the processing performed for transmission on the transmitting side, the reception processor may perform the reverse process to the operations of the transmission processor described above. The reception processor may deliver the acquired mesh video data to the decapsulation processor and the acquired mesh video-related metadata to the metadata parser. The mesh video-related metadata acquired by the reception processor may be in the form of a signaling table.

The decapsulation processor (file/segment decapsulation module) may decapsulate mesh video data in the form of files received from the reception processor. The decapsulation processor may decapsulate the files according to ISOBMFF or the like to acquire a mesh video bitstream or mesh video-related metadata (metadata bitstream). The acquired mesh video bitstream may be delivered to the mesh video decoder, and the acquired mesh video-related metadata (metadata bitstream) may be delivered to the metadata processor. The mesh video bitstream may include metadata (metadata bitstream). The metadata processor may be included in the mesh video decoder, or may be configured as a separate component/module. The mesh video-related metadata acquired by the decapsulation processor may be in the form of boxes or tracks in the file format. The decapsulation processor may receive metadata required for decapsulation from the metadata processor, when necessary. The mesh video-related metadata may be delivered to the mesh video decoder for use in the mesh video decoding procedure, or to the renderer for use in the mesh video rendering procedure.

The mesh video decoder may receive the input bitstream and perform an operation corresponding to the operation of the mesh video encoder to decode the video/images. The decoded mesh video/images may be displayed through the display of the renderer. The user may view all or a portion of the rendered result through a VR/AR display, a general display, or the like.

The feedback process may include transmitting various kinds of feedback information that may be acquired during the rendering/display operation to the transmitting side or to the decoder on the receiving side. The feedback process may provide interactivity in consuming the mesh video. In some embodiments, the feedback process may include transmitting head orientation information, viewport information indicative of an area the user is currently viewing, and the like. In some embodiments, the user may interact with objects implemented in the VR/AR/MR/autonomous driving environment. In this case, the information related to the interaction may be delivered to the transmitting side or service provider during the feedback process. In some embodiments, the feedback process may be skipped.

The head orientation information may refer to information about the user's head position, angle, movement, etc. Based on this information, information about the area that the user is currently viewing within the mesh video, i.e., viewport information, may be calculated.

The viewport information may be information about the area in the mesh video that the user is currently viewing. Gaze analysis may be performed based on this information to determine how the user consumes the mesh video, how long the user is looking at a particular area of the mesh video, and the like. The gaze analysis may be performed on the receiving side and the result may be delivered to the transmitting side through a feedback channel. A device, such as a VR/AR/MR display, may extract a viewport area based on the user's head position/orientation, the vertical or horizontal FOV supported by the device, etc.

In some embodiments, the feedback information described above may not only be delivered to the transmitter, but may also be consumed on the receiving side. In other words, operations such as decoding and rendering may be performed on the receiving side based on the feedback information described above. For example, based on the head orientation information and/or viewport information, only the mesh video for the area currently being viewed by the user may be preferentially decoded and rendered.

The present disclosure relates to dynamic mesh video compression as described above. The methods/embodiments disclosed herein may be applied to the standard of Video-based Dynamic mesh compression (V-Mesh) of the Moving Picture Experts Group (MPEG) or any next-generation video/image coding standard. Dynamic mesh video compression is a method for processing mesh connectivity information and attributes that change over time. It may perform lossy and lossless compression for a variety of applications such as real-time communications, storage, free-viewpoint video, and AR/VR.

The dynamic mesh video compression method described below is based on the V-mesh method of the MPEG.

In the present disclosure, a picture/frame may generally refer to a unit that represents one image at a specific time.

A pixel or pel may refer to the smallest unit that constitutes a picture (or video). Additionally, the term "sample" may be used as a term corresponding to a pixel. A sample may generally indicate a pixel or the value of the pixel in general. It may indicate only the pixel/pixel value of the luma component, or may indicate only the pixel/pixel value of the chroma component, or may indicate only the pixel/pixel value of the depth component.

A unit may represent the basic unit of image processing. The unit may include at least one of a specific area of the picture and information related to the region. In some cases, the term unit may be used interchangeably with terms such as block or area. In general, an MxN block may include a set (or array) of samples (or a sample array) or transform coefficients composed of M columns and N rows.

The encoding process of FIG. 1 is performed as follows.

The compression method of Video-based dynamic mesh compression (V-Mesh) may provide a method of compressing dynamic mesh video data based on 2D video codecs such as High Efficiency Video Coding (HEVC) and Versatile Video Coding (VVC). In the V-Mesh compression process, the following data is received as input and compressed.

Input mesh: Includes 3D coordinates (geometry) of the vertices comprising the mesh, normal information about each vertex, mapping information for mapping the surface of the mesh to a 2D plane, and connectivity between the vertices constituting the surface. The surface of the mesh may be represented by triangles or other polygons, and the connectivity information between the vertices constituting the surface is stored according to a predetermined shape. The input mesh may be stored in the OBJ file format.

Attribute map (Texture map is also used interchangeably hereafter): Contains information about the attributes (color, normals, displacements, etc.) of a mesh and stores the data in the form of a mapping of the surface of the mesh onto a 2D image. Mapping indicating which part (surface or vertex) of the mesh corresponds to each piece of data in the attribute map is based on the mapping information contained in the input mesh. Since the attribute map has data about each frame of the mesh video, it may also be referred to as an attribute map video (or simply as attributes). The attribute map in the V-Mesh compression method mainly contains the color information about the mesh and is stored in an image file format (PNG, BMP, etc.).

Material library file: Contains the material attribute information used in the mesh, specifically the information that links the input mesh to the corresponding attribute map. It is stored in the Wavefront Material Template Library (MTL) file format.

In the V-Mesh compression method, the following data and information may be generated through the compression process.

Base mesh: Represents the objects in the input mesh using the minimum vertices determined according to the user's criteria by decimating the input mesh through the pre-processing process.

Displacement: Displacement information used to represent the input mesh as similarly as possible using the base mesh, expressed in 3D coordinates.

Atlas information: Metadata needed to reconstruct a mesh using the base mesh, displacement, and attribute map information. It may be generated and utilized in sub-units (sub-mesh, patch, etc.) that constitute the mesh.

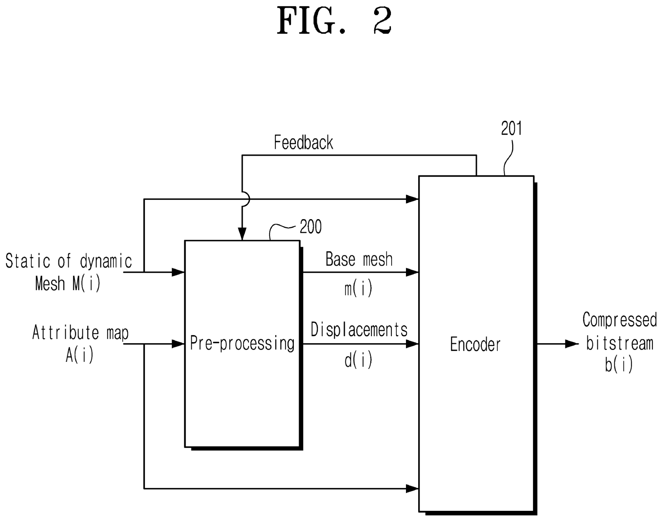

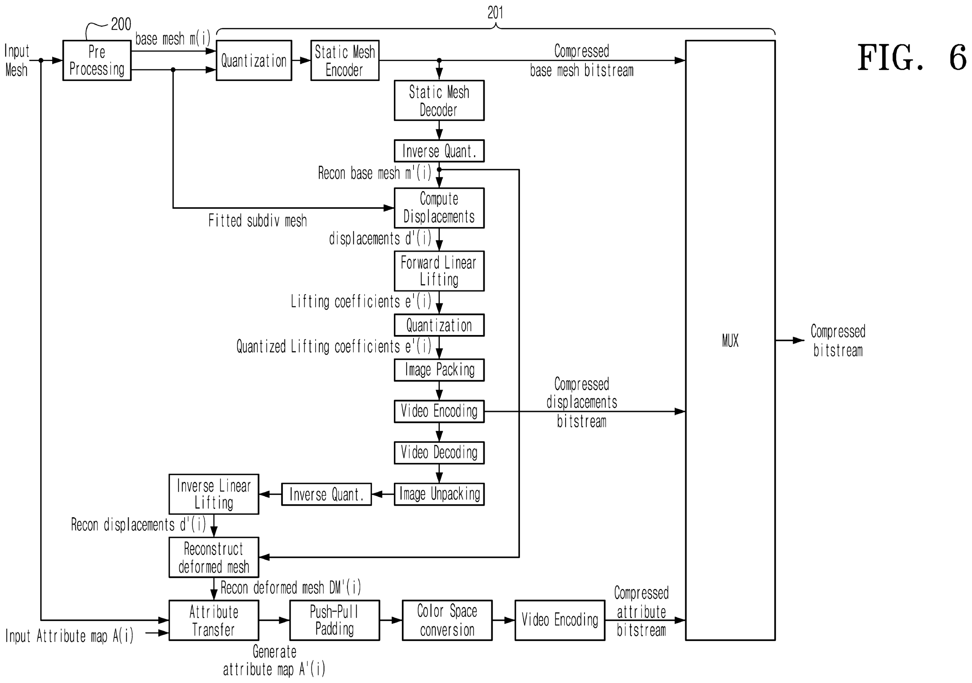

A method of encoding mesh position information (or vertex) is described with reference to FIGS. 2 to 7, and a method of reconstructing mesh position information to encode attribute information (attribute map) is described with reference to FIGS. 6 to 10 and the like.

FIG. 2 illustrates a V-MESH compression method according to embodiments.

FIG. 2 illustrates the encoding process of FIG. 1, wherein the encoding process may include a pre-processing process and an encoding process. The encoder of FIG. 1 may include a pre-processor 200 and an encoder 201, as shown in FIG. 2. The transmission device of FIG. 1 may be broadly referred to as an encoder, and the dynamic mesh video encoder of FIG. 1 may be referred to as an encoder. The V-Mesh compression method may include pre-processing and encoding 201, as shown in FIG. 2. The pre-processor of FIG. 2 may be positioned at the front end of the encoder of FIG. 2. The pre-processor and encoder of FIG. 2 may be referred to as a single encoder.

The pre-processor may receive a static dynamic mesh and/or an attribute map. The pre-processor may generate a base mesh and/or displacements through pre-processing. The pre-processor may receive feedback information from the encoder, and may generate the base mesh and/or displacements based on the feedback information.

The encoder may receive the base mesh, the displacements, the static dynamic mesh, and/or the attribute map. The encoder may encode the mesh-related data to generate a compressed bitstream.

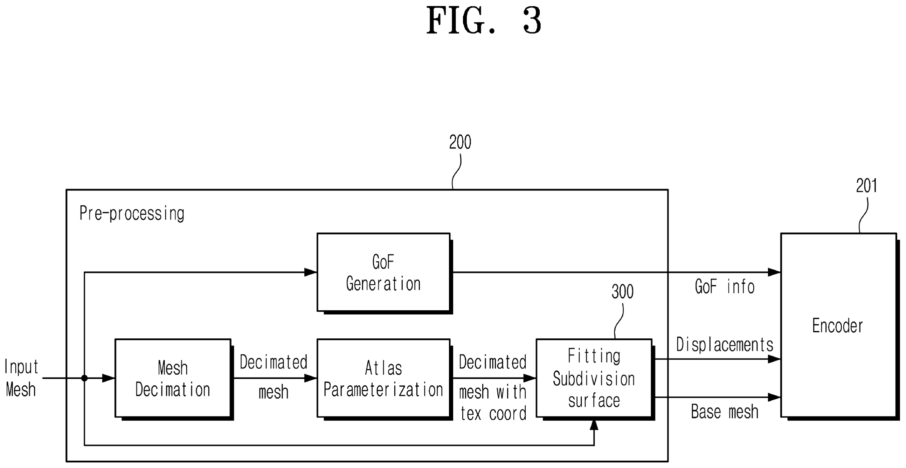

FIG. 3 illustrates pre-processing in V-MESH compression according to embodiments.

FIG. 3 illustrates the configuration and operation of the pre-processor of FIG. 2.

FIG. 3 illustrates the process of performing pre-processing on the input mesh. The pre-processing 200 may include four operations: 1) Group of Frame (GoF) generation, 2) mesh decimation, 3) UV parameterization, and 4) fitting subdivision surface (300). The pre-processor 200 may receive input mesh, generate displacements and/or a base mesh, and deliver the same to the encoder 201. The pre-processor 200 may deliver GoF information related to the GoF generation to the encoder 201.

Hereinafter, each operation in FIG. 3 is described.

GoF generation: A process of generating a reference structure for the mesh data. When the mesh of the previous frame and the current mesh have the same number of vertices, same number of texture coordinates, same vertex connectivity information, and same texture coordinate connectivity information, the previous frame may be set as a reference frame. In other words, if only the vertex coordinate values are different between the current input mesh and the reference input mesh, inter frame encoding may be performed. Otherwise, the frame may be subjected to intra frame encoding.

Mesh decimation: A process of simplifying the input mesh to create a simplified mesh, called a base mesh. Vertices to remove may be selected from the original mesh based on user-defined criteria, and then the selected vertices and the triangles connected to the selected vertices may be removed.

In the process of performing mesh decimation, the voxelized input mesh, target triangle ratio (TTR), and minimum triangle component (CCCount) information may be delivered as input, and the decimated mesh may be obtained as output. In the process, connected triangle components that are smaller than the set minimum triangle component (CCCount) may be removed.

UV parameterization: A process of mapping a 3D curved surface into a texture domain for the decimated mesh. Parameterization may be performed using the UV Atlas tool. This process generates mapping information indicating where each vertex of the decimated mesh may be mapped to on the 2D image. The mapping information is expressed and stored as texture coordinates, and the final base mesh is generated through this process.

Fitting subdivision surface: An operation of performing subdivision on the decimated mesh. A user-defined method, such as the mid-edge method, may be applied as the subdivision method. A fitting process is performed such that the input mesh and the subdivided mesh become similar to each other.

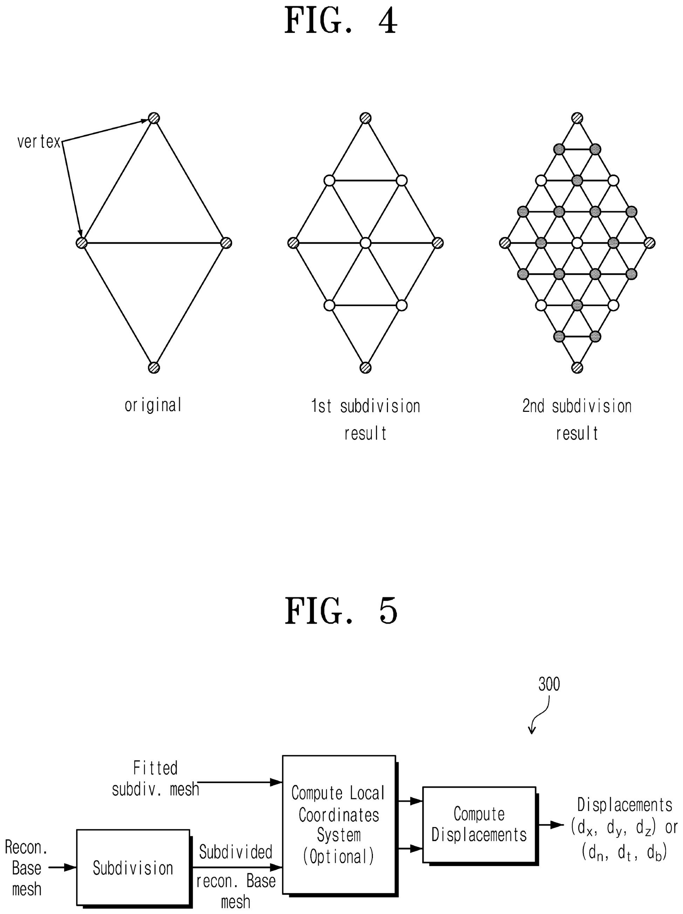

FIG. 4 illustrates a mid-edge subdivision method according to embodiments.

FIG. 4 illustrates a mid-edge subdivision method for the fitting subdivision surface described with reference to FIG. 3. Referring to FIG. 4, the original mesh containing four vertices is subdivided to create sub-meshes. The sub-meshes may be created by creating new vertices in the middle of the edges between the vertices.

Once the fitted subdivided mesh is generated, the displacements are calculated based on this result and the previously compressed and decoded base mesh (hereinafter referred to as the reconstructed base mesh). In other words, the reconstructed base mesh is subdivided in the same way as the fitting subdivision surface. The difference in position between this result and each vertex in the fitted subdivided mesh is the displacement for each vertex. Since the displacement represents a difference in position in 3D space, it is expressed as values in (x, y, z) space in the Cartesian coordinate system. Depending on a user input parameter, the coordinate values of (x, y, z) may be converted to coordinate values of (normal, tangential, bi-tangential) in a local coordinate system.

FIG. 5 illustrates a displacement generation process according to embodiments.

FIG. 5 illustrates in detail how displacements are calculated for the fitting subdivision surface 300, as described with reference to FIG. 4.

The encoder and/or pre-processor according to the embodiments may include 1) a subdivider, 2) a local coordinate system calculator, and 3) a displacement vector calculator. The subdivider may receive a reconstructed base mesh and generate a subdivided reconstructed base mesh. The local coordinate system calculator may receive the fitted subdivided mesh and the subdivided reconstructed base mesh, and may transform the coordinate system related to the mesh to a local coordinate system. The local coordinate system calculation may be optional. The displacement calculator calculates the difference in position between the fitted subdivision mesh and the subdivided reconstructed base mesh. For example, it may generate the difference in position between the vertices in the two input meshes. The difference in position between the vertices is the displacement.

The point cloud data transmission method and device according to embodiments may encode the point cloud as follows. Point cloud data (which may be referred to as a point cloud for short) according to embodiments may refer to data including vertex coordinates and color information. Point cloud is a term that includes mesh data. The terms point cloud and point cloud data may be used interchangeably herein.

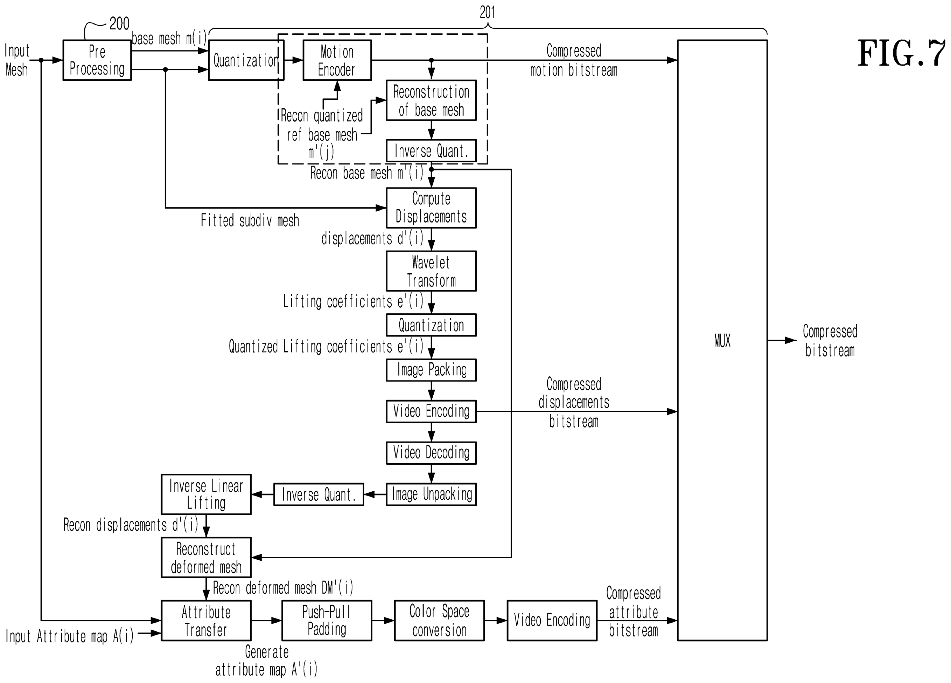

According to embodiments, the V-Mesh compression (reconstruction) method may include intra frame encoding (FIG. 6) and inter frame encoding (FIG. 7).

Based on the results of the GoF generation described above, intra frame encoding or inter frame encoding is performed. In the intra encoding, the data to be compressed may be a base mesh, displacements, an attribute map, and the like. In the inter encoding, the data to be compressed may be displacements, an attribute map, and a motion field between the reference base mesh and the current base mesh.

FIG. 6 illustrates an intra-frame encoding process in a V-MESH compression method according to embodiments.

The encoding process of FIG. 6 details the encoding of FIG. 1. That is, it represents the configuration of the encoder when the encoding of FIG. 1 is intra-frame encoding. The encoder of FIG. 6 may include a pre-processor 200 and/or an encoder 201.

The pre-processor may receive an input mesh and perform the pre-processing described above. A base mesh and/or a fitted subdivided mesh may be generated through the pre-processing. The quantizer may quantize the base mesh and/or the fitted subdivided mesh. The static mesh encoder may encode the static mesh. The static mesh encoder may generate a bitstream containing the encoded base mesh. The static mesh decoder may decode the encoded static mesh. The inverse quantizer may inversely quantize the quantized static mesh. The displacement calculator may receive a reconstructed static mesh, and may generate a displacement, which is the difference in position based on the fitted subdivided mesh. The forward linear lifting unit may receive the displacement and generate lifting coefficients. The quantizer may quantize the lifting coefficients. The image packer may pack the image based on the quantized lifting coefficients. The video decoder decodes the encoded video. The image unpacker may unpack the packed image. The inverse quantizer may inversely quantize the image. The inverse linear lifting unit applies inverse lifting to the image to generate a reconstructed displacement. The mesh reconstructor reconstructs a deformed mesh based on the reconstructed displacement and the reconstructed base mesh. The attribute transfer receives an input mesh and/or an input attribute map and generates an attribute map based on the reconstructed deformed mesh. The push-pull padding unit may pad data to the attribute map based on a push-pull method. The color space converter may convert the space of the color component, which is an attribute. The video encoder may encode the attribute. The multiplexer may multiplex the compressed base mesh, the compressed displacement, and the compressed attribute to generate a bitstream.

FIG. 7 illustrates an inter-frame encoding process in a V-MESH compression method according to embodiments.

The encoding process of FIG. 7 details the encoding of FIG. 1 in detail. That is, it represents the configuration of the encoder when the encoding of FIG. 1 is inter-frame encoding. The encoder of FIG. 7 may include a pre-processor 200 and/or an encoder 201.

For the components of the encoding operation of FIG. 7 that correspond to the encoding operation of FIG. 6, refers to the description of FIG. 7. For inter-frame-based encoding in FIG. 7, the motion encoder may encode a motion based on the reconstructed quantized reference base mesh. The base mesh reconstructor may reconstruct a base mesh based on the reconstructed quantized reference base mesh.

The encoder in FIG. 6 compresses the base mesh, displacement, and attributes within a frame to generate a bitstream, while the encoder in FIG. 7 compresses the motion, displacement, and attributes between the current frame and a reference frame to generate a bitstream.

The encoding method according to the embodiments includes base mesh encoding (intra encoding). When performing intra-frame encoding on a current input mesh frame, the base mesh generated during pre-processing may undergo quantization and be then encoded using a static mesh compression technique. In the V-Mesh compression method, for example, the Draco technique is applied, and the targets to be compressed include vertex position information, mapping information (texture coordinates), vertex connectivity data, etc. related to the base mesh.

The encoding method according to the embodiments may include motion field encoding (also inter encoding). Inter frame encoding may be performed when the reference mesh and the current input mesh have a one-to-one correspondence of vertices, and only the position information about the vertices differs therebetween. When inter frame encoding is performed, the base mesh may not be compressed. Instead, the difference between the vertices of the reference base mesh and the current base mesh, i.e., the motion field may be computed and encoded. The reference base mesh is the result of quantizing the decoded base mesh data and is determined by the reference frame index determined in the GoF generation. The motion field may be encoded as it is. Alternatively, a predicted motion field may be calculated by averaging the motion fields of the reconstructed vertices among the vertices connected to the current vertex, and a residual motion field, which is the difference between the value of the predicted motion field and the value of the motion field of the current vertex, may be encoded. The value of this field may be encoded using entropy coding. Except for the motion field encoding in the inter frame encoding, the process of encoding the displacements and attribute map is the same as the structure of the intra frame encoding method except for the base mesh encoding.

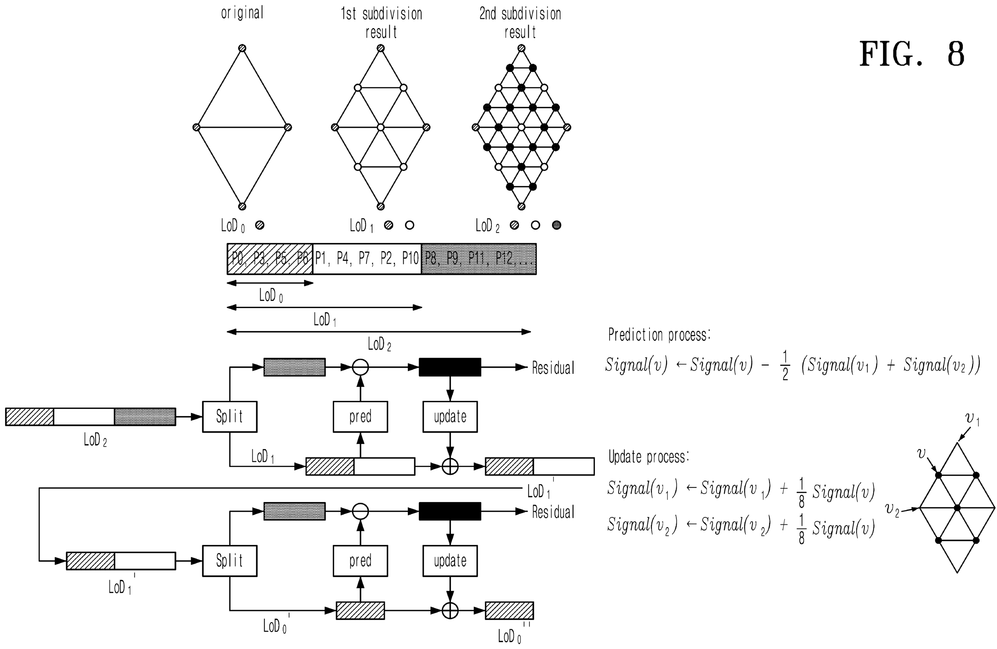

FIG. 8 illustrates a lifting transform process for displacements according to embodiments.

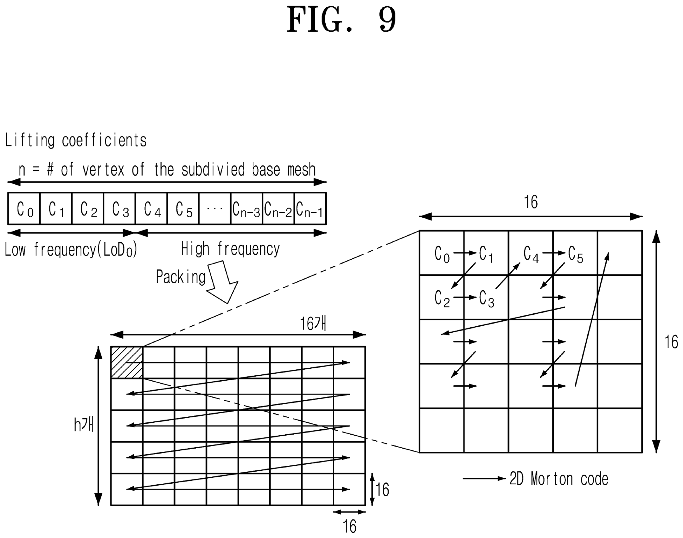

FIG. 9 illustrates a process of packing transform coefficients into a 2D image according to embodiments.

FIGS. 8 and 9 illustrate the process of transforming displacements and packing transform coefficients in the encoding process of FIGS. 6 and 7, respectively.

An encoding method according to the embodiments includes displacement encoding.

After base mesh encoding and/or motion field encoding, a reconstructed base mesh may be generated through reconstruction and inverse quantization, and a displacement may be calculated between a result of subdivision of the reconstructed base mesh and a fitted subdivided mesh generated through the fitting subdivision surface. A data transform process, such as a wavelet transform, may be applied to the displacement information for effective encoding.

FIG. 8 illustrates the process of transforming displacement information in V-Mesh using the lifting transform. The transform coefficients generated through the transform process are quantized and then packed into a 2D image. The transform coefficients may be organized into blocks, one block for every 256 (=16×16) units. Each block may be packed in a z-scan order. The number of rows in a block is fixed to 16, but the number of columns in the block may be determined by the number of vertices in the subdivided base mesh. Within a block, the transform coefficients may be sorted with the Morton code and packed. For the packed images, a displacement video may be generated per GoF. The displacement video may be encoded using a conventional video compression codec.

Referring to FIG. 8, the base mesh (original) may include vertices and edges for LoD0. A first subdivision mesh generated by splitting the base mesh includes vertices generated by further splitting the edges of the base mesh. The first subdivision mesh contains vertices for LoD0 and vertices for LoD1. LoD1 includes subdivided vertices and vertices from the base mesh (LoD0). The first subdivision mesh may be split to generate a second subdivision mesh. The second subdivision mesh contains LoD2. LoD2 includes a base mesh vertex (LoD0), LoD1 containing vertices additionally generated from LoD0, and vertices further split from LoD1. LoD is a level of detail that indicates the degree of detail. As the index of the level increases, the distance between vertices is shortened, and the level of detail rises. LoD N contains the vertices contained in LoD N-1. In the case where the vertex is further split through subdivision, the mesh may be encoded based on a prediction and/or updating method, taking into account the previous vertices v1 and v2, and the subdivided vertex v. Instead of encoding the information for the current LoD N as it is, a residual with respect to previous LoD N-1 may be generated. Thus, the mesh may be encoded using the residual to reduce the size of the bitstream. The prediction process refers to the operation of predicting the current vertex v from the previous vertices v1 and v2. Since neighboring subdivision meshes have similar data, this property may be exploited for efficient encoding. The current vertex position information is predicted from the residual for the previous vertex position information, and the previous vertex position information is updated based on the residual.

Referring to FIG. 9, a vertex has a coefficient generated through lifting transform. The coefficient of the vertex related to the lifting transform may be packed into an image and then encoded.

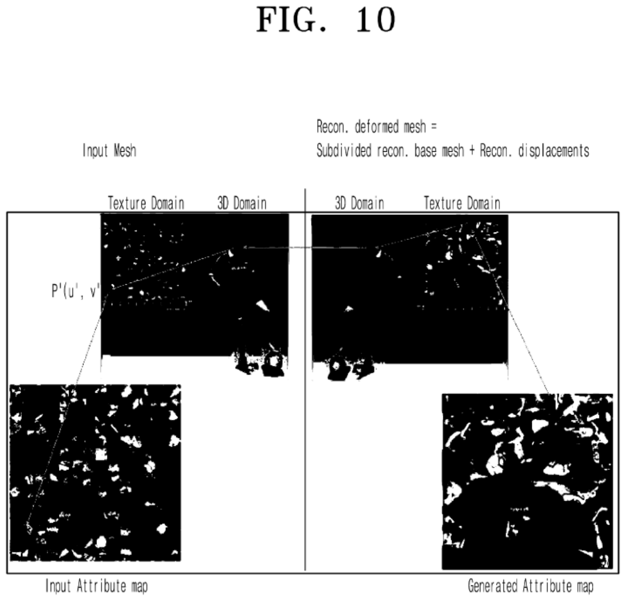

FIG. 10 illustrates an attribute transfer process in a V-MESH compression method according to embodiments.

FIG. 10 illustrates a detailed operation of the attribute transfer in the encoding of FIGS. 6, 7, etc.

The encoding according to the embodiments includes attribute map encoding.

Information about the input mesh is compressed through base mesh encoding, motion field encoding, and displacement encoding. The input mesh compressed in the encoding process is reconstructed through base mesh decoding (intra frame), motion field decoding (inter frame), and displacement video decoding, and the reconstructed deformed mesh (hereinafter referred to as Recon. deformed mesh), which is the result of the reconstruction, is used to compress the input attribute map, as shown in FIGS. 6 and 7. The Recon. deformed mesh has position information about vertices, texture coordinates, and corresponding connectivity information, but does not have color information corresponding to the texture coordinates. Therefore, as shown in FIG. 10, in the V-Mesh compression method, a new attribute map having color information corresponding to the texture coordinates of the recon. deformed mesh is generated through the attribute transfer process.

The attribute transfer first checks, for every point P(u, v) in the 2D texture domain, whether the corresponding point is within a texture triangle of the Recon. deformed mesh. When the corresponding vertex is in the texture triangle T, the attribute transfer calculates the barycentric coordinates (α, β, γ) of P(u, v) according to the triangle T. Then, it calculates the 3D coordinates M(x, y, z) of P(u, v) based on the 3D vertex positions of the triangle T and (α, β, γ). The vertex coordinates M'(x', y', z') that corresponds to the closest position to the calculated M(x, y, z) and a triangle T' containing this point are searched for in the input mesh domain. Then, the barycentric coordinates (α', β', γ') of M'(x', y', z') in the triangle T' are calculated. The texture coordinates (u', v') are calculated based on the texture coordinates corresponding to the three vertices of triangle T' and (α', β', γ'), and the color information corresponding to the coordinates are searched for in the input attribute map. The color information found in this way is then assigned to the (u, v) pixel position in the new input attribute map. If P(u, v) does not belong to any triangle, the pixel at the position in the new input attribute map be filled with a color value using a padding algorithm, such as the push-pull algorithm.

The new attribute map generated by the attribute transfer is bundled into GoFs to construct an attribute map video, which is compressed using a video codec.

A reference relationship between the input mesh, the input attribute map, the reconstructed mesh, and the generated attribute map may be seen from FIG. 10.

The decoding process of FIG. 1 may perform the reverse of the encoding process of FIG. 1. Specifically, the decoding process is performed as disclosed below.

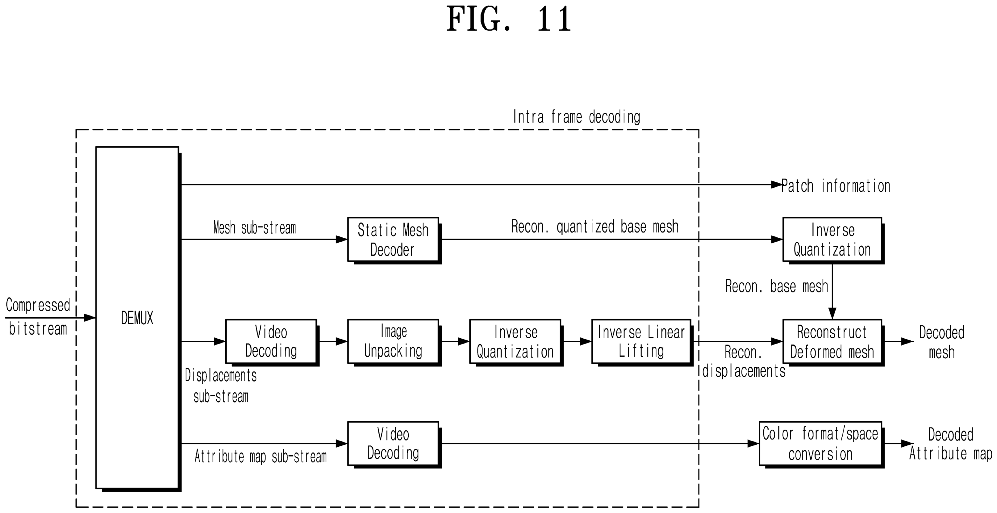

FIG. 11 shows the intra-frame decoding process of the V-MESH compression method according to embodiments.

FIG. 11 illustrates the configuration and operation of the decoder of the reception device of FIG. 1 and the like.

FIG. 11 shows the intra decoding process of the V-Mesh technology according to embodiments. First, the bitstream may be separated into a mesh sub-stream, a displacement sub-stream, an attribute map sub-stream, and a sub-stream containing patch information about the mesh, such as V3C/V-PCC.

The mesh sub-stream may be decoded through the decoder of a static mesh codec used in the encoding such as, for example, Google Draco. As a result, connectivity information, vertex geometry information, vertex texture coordinates, and the like related to the base mesh may be reconstructed. The displacement sub-stream may be decoded into a displacement video through the decoder of the video compression codec used in the encoding. Then, image unpacking, inverse quantization, and inverse transform are performed to reconstruct the displacement information about each vertex. Then, inverse quantization is applied to the reconstructed base mesh, and then the result thereof is combined with the reconstructed displacement information to generate a final decoded mesh.

The attribute map sub-stream is decoded by the decoder of the video compression codec used in the encoding, and then a final attribute map is reconstructed through color format transform and the like.

The reconstructed decoded mesh and decoded attribute map may be utilized at the receiving side as final mesh data that may be utilized by a user.

Referring to FIG. 11, the bitstream includes patch information, a mesh sub-stream, a displacement sub-stream, and an attribute map sub-stream. The term sub-stream is interpreted as referring to a partial bitstream included in the bitstream. The bitstream contains patch information (data), mesh information (data), displacement information (data), and attribute map information (data).

The decoder performs intra-frame decoding as follows. The static mesh decoder decodes the mesh to generate a reconstructed quantized base mesh, and the inverse quantizer applies the quantization parameters of the quantizer in reverse to generate a reconstructed base mesh. The video decoder decodes the displacement, the unpacker unpacks the decoded video image, and the inverse quantizer inversely quantizes the quantized image. The inverse linear lifting unit applies a lifting transform in the reverse process of the encoder to generate a reconstructed displacement. The mesh reconstructor 630 generates a deformed mesh based on the base mesh and the displacement. The video decoder decodes the attribute map, and the color transformer transforms the color format and/or space to generate a decoded attribute map.

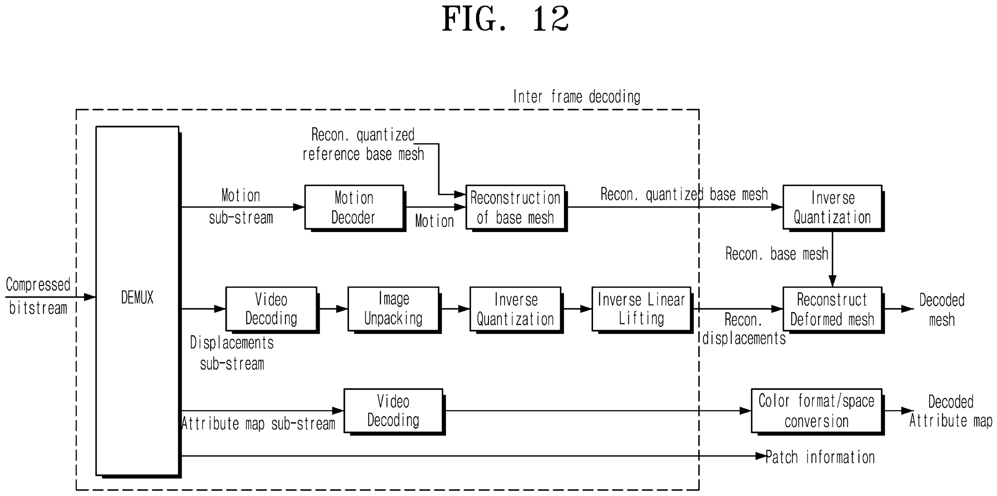

FIG. 12 illustrates an inter-frame decoding process of V-MESH technology.

FIG. 12 illustrates the configuration and operation of the decoder of the reception device of FIG. 1 and the like.

FIG. 12 illustrates the inter decoding process of V-MESH technology. First, the input bitstream may be separated into a motion sub-stream, a displacement sub-stream, an attribute sub-stream, and a sub-stream containing patch information about the mesh, such as V3C/V-PCC.

The motion sub-stream is decoded through entropy decoding and inverse prediction, and the reconstructed motion information is combined with a pre-reconstructed and stored reference base mesh to generate a reconstructed quantized base mesh for the current frame. Then, inverse quantization is applied to the reconstructed quantized base mesh, and the result thereof is combined with the displacement information reconstructed using the same method as the above-described intra decoding to generate a final decoded mesh. The reconstructed decoded mesh and the decoded attribute map may be utilized at the receiving side as the final mesh data that may be utilized by the user.

Referring to FIG. 12, the bitstream contains a motion, displacements, and an attribute map. Because inter-frame decoding is performed, the process further includes decoding the inter-frame motion information. A reconstructed base mesh is generated by decoding the motion and generating a reconstructed quantized base mesh for the motion based on the reference base mesh. For the operations in FIG. 12 that are the same as those in FIG. 11, refer to the description of FIG. 11.

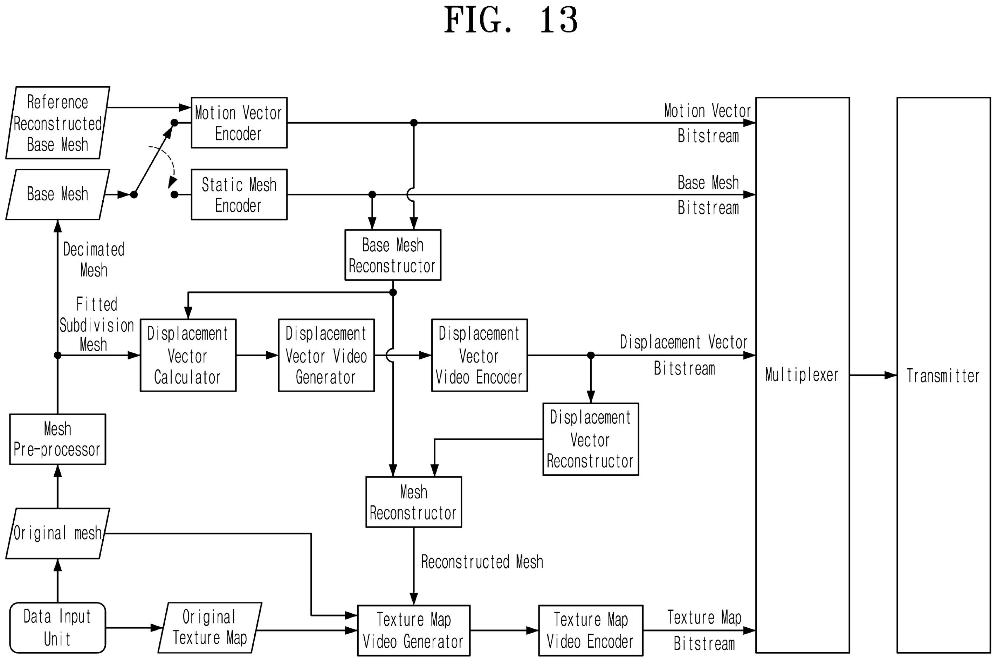

FIG. 13 illustrates a point cloud data transmission device according to embodiments.

FIG. 13 corresponds to the transmission device 100 or dynamic mesh video encoder 102 of FIG. 1, the encoder (pre-processor and encoder) of FIG. 2, and/or the corresponding transmission encoding device. Each component of FIG. 13 corresponds to hardware, software, a processor, and/or a combination thereof.

The process of operations at the transmitting side for compressing and transmitting dynamic mesh data using a V-Mesh compression technique may be configured as shown in FIG. 13.

The mesh pre-processor receives the original mesh and generates a decimated mesh. The decimation may be performed based on a target number of vertices or a target number of polygons constituting the mesh. Parameterization may be performed on the decimated mesh to generate texture coordinates and texture connectivity information per vertex. The mesh information in a floating-point form may be quantized to a fixed-point form. The result is the base mesh, which may be encoded by a static mesh encoder. The mesh pre-processor may perform a mesh subdivision on the base mesh to generate additional vertices. Depending on the subdivision method, vertex connectivity information including the additional vertices, texture coordinates, and connectivity information about the texture coordinates may be generated. A fitted subdivided mesh may be generated by adjusting vertex positions such that the subdivided mesh becomes similar to the original mesh.

When intra-frame encoding (intra encoding) is performed on the mesh frame, the base mesh may be compressed through the static mesh encoder. In this case, the connectivity information, vertex geometry information, vertex texture information, normal information, and the like related to the base mesh may be encoded. The base mesh bitstream generated through the encoding is transmitted to the multiplexer.

When inter-frame encoding (inter encoding) is performed on the mesh frame, the motion vector encoder may operate to receive as input a base mesh and a reference reconstructed base mesh, compute a motion vector between the two meshes, and encode the value thereof. Further, the motion vector encoder may perform connectivity information-based prediction using the previously encoded/decoded motion vector as a predictor, and encode a residual motion vector, which is obtained by subtracting the predicted motion vector from the current motion vector. The motion vector bitstream generated by the encoding is transmitted to the multiplexer.

A reconstructed base mesh may be generated from the encoded base mesh and motion vectors through the base mesh reconstructor.

The displacement vector calculator may perform mesh subdivision on the reconstructed base mesh. A vector may be calculated as a value of the difference in vertex position between the subdivided reconstructed base mesh and the fitted subdivision mesh generated by the pre-processor. As a result, displacement vectors as many as vertices in the subdivided mesh may be calculated. The displacement vector calculator may transform the displacement vectors calculated in the 3D Cartesian coordinate system to a local coordinate system based on the normal vector of each vertex.

The displacement vector video generator may transform the displacement vectors for effective encoding. According to embodiments, the transform may be lifting transform, wavelet transform, or the like. In addition, quantization may be performed on the transformed displacement vector values, i.e., the transform coefficients. In this case, different quantization parameters may be applied to the axes of the transform coefficients, respectively. The quantization parameters may be derived by an agreement between the encoder/decoder. After transform and quantization, the displacement vector information may be packed into a 2D image. A displacement vector video may be generated by grouping the packed 2D images for each frame. A displacement vector video may be generated for each group of frames (GoF) of the input mesh.

The displacement vector video encoder may encode the generated displacement vector video using a video compression codec. The generated displacement vector video bitstream is transmitted to the multiplexer.

The displacement vectors reconstructed through the displacement vector reconstructor and the base mesh reconstructed and subdivided through the base mesh reconstructor are reconstructed through the mesh reconstructor. The reconstructed mesh has reconstructed vertices, inter-vertex connectivity information, texture coordinates, and inter-texture coordinate connectivity information.

A texture map of a reconstructed mesh may re-generated from the texture map of the original mesh through the texture map video generator. The vertex-by-vertex color information in the texture map of the original mesh may be assigned to the texture coordinates of the reconstructed mesh. A texture map video may be generated by grouping the frame-level re-generated texture maps into GoFs.

The generated texture map video may be encoded by the texture map video encoder using a video compression codec. A texture map video bitstream generated through the encoding is transmitted to the multiplexer.

The generated motion vector bitstream, base mesh bitstream, displacement vector bitstream, and texture map bitstream may be multiplexed into a single bitstream to be transmitted to the receiving side through the transmitter. Alternatively, for the generated motion vector bitstream, base mesh bitstream, displacement vector bitstream, and texture map bitstream, a file with one or more track data may be generated or the bitstreams may be encapsulated into segments and transmitted to the receiving side through the transmitter.

Referring to FIG. 13, the transmitter (encoder) may encode the mesh in an intra-frame or inter-frame manner. According to intra-encoding, the transmission device may generate a base mesh, displacement vectors (or displacements), and a texture map (or attribute map). According to inter-encoding, the transmission device may generate a motion vector (or motion), a base mesh, displacement vectors (or displacements), and a texture map (or attribute map). The texture map acquired from the data input unit is generated and encoded based on the reconstructed mesh. The displacements are generated and encoded based on the differences in vertex positions between the base mesh and the subdivided mesh. The base mesh is generated by pre-processing, decimating, and encoding the original mesh. For the motion, a motion vector is generated for the mesh in the current frame based on the reference base mesh in the previous frame.

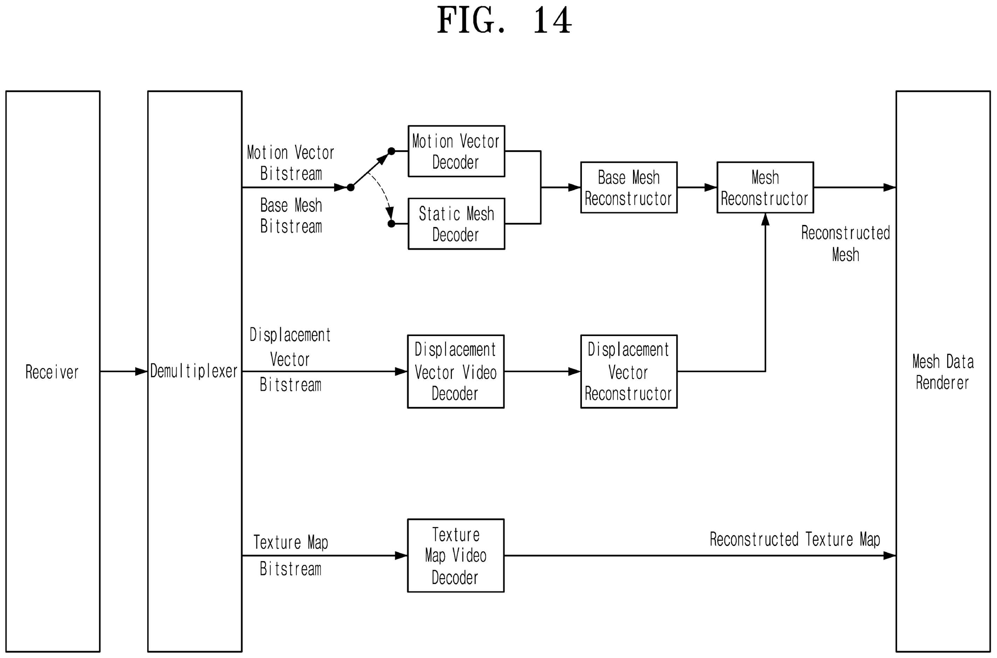

FIG. 14 illustrates a point cloud data reception device according to embodiments.

FIG. 14 corresponds to the reception device 110 or mesh video decoder 113 of FIG. 1, the decoder of FIG. 11 or 12, and/or a corresponding receiving decoding device. Each component of FIG. 14 corresponds to hardware, software, a processor, and/or a combination thereof. The reception (decoding) operation of FIG. 14 may follow a reverse process to the corresponding process of the transmission (encoding) operation of FIG. 13.

The bitstream of the received mesh is subjected to file/segment decapsulation and then demultiplexed into a compressed motion vector bitstream or base mesh bitstream, a displacement vector bitstream, and a texture map bitstream.

In the case where inter-frame encoding is applied to the current mesh based on the frame header information, the motion vector decoder may decode the motion vector bitstream. The previously decoded motion vector may be used as a predictor and add the same to the residual motion vector decoded from the bitstream to reconstruct the final motion vector.

In the case where intra-frame encoding is applied to the current mesh based on the frame header information, the static mesh decoder may decode the base mesh bitstream to reconstruct connectivity information, vertex geometry information, texture coordinates, normal information, and the like related to the base mesh.

In the case where inter-frame encoding is applied to the current mesh, the base mesh reconstructor may add the decoded motion vectors to the reference base mesh and perform inverse quantization to reconstruct the current base mesh. In the case where intra-frame encoding is applied to the current mesh, inverse quantization may be performed on the base mesh decoded by the static mesh decoder to generate a reconstructed base mesh.

The displacement vector video decoder may decode the displacement vector bitstream as a video bitstream using a video codec.

The displacement vector reconstructor extracts displacement vector transform coefficients from the decoded displacement vector video, and reconstructs displacement vectors through inverse quantization and inverse transform. If the reconstructed displacement vectors are values in a local coordinate system, inverse transform to the Cartesian coordinate system may be performed.

The mesh reconstructor may subdivide the reconstructed base mesh to generate additional vertices. Through the subdivision, vertex connectivity information including the additional vertices, texture coordinates, and connectivity information about the texture coordinates may be generated. The subdivided reconstructed base mesh may be combined with the reconstructed displacement vectors to generate a final reconstructed mesh.

The texture map video decoder may decode the texture map bitstream as a video bitstream using a video codec. The reconstructed texture map has color information about each vertex in the reconstructed mesh, and the texture coordinates of each vertex may be used to obtain the color value of the vertex from the texture map.

The reconstructed mesh and texture map are presented to the user through a rendering process using the mesh data renderer or the like.

Referring to FIG. 14, the reception device (decoder) may decode the mesh in an intra-frame or inter-frame manner. According to intra-decoding, the reception device may receive a base mesh, displacement vectors (or displacements), and a texture map (or attribute map), and decode the reconstructed mesh and reconstructed texture map to render mesh data. According to inter-decoding, the reception device may receive a motion vector (or motion), a base mesh, displacement vectors (or displacements), a texture map (or attribute map), and decode the reconstructed mesh and the reconstructed texture map to render mesh data.

A point cloud data transmission device and method according to embodiments may encode the mesh data, and transmit a bitstream containing the encoded mesh data. A point cloud data reception device and method according to embodiments may receive a bitstream containing mesh data and decode the mesh data. The point cloud data transmission/reception method/device according to embodiments may be referred to as a method/device according to embodiments. The point cloud data transmission/reception method/device may also be referred to as a mesh data transmission/reception method/device.

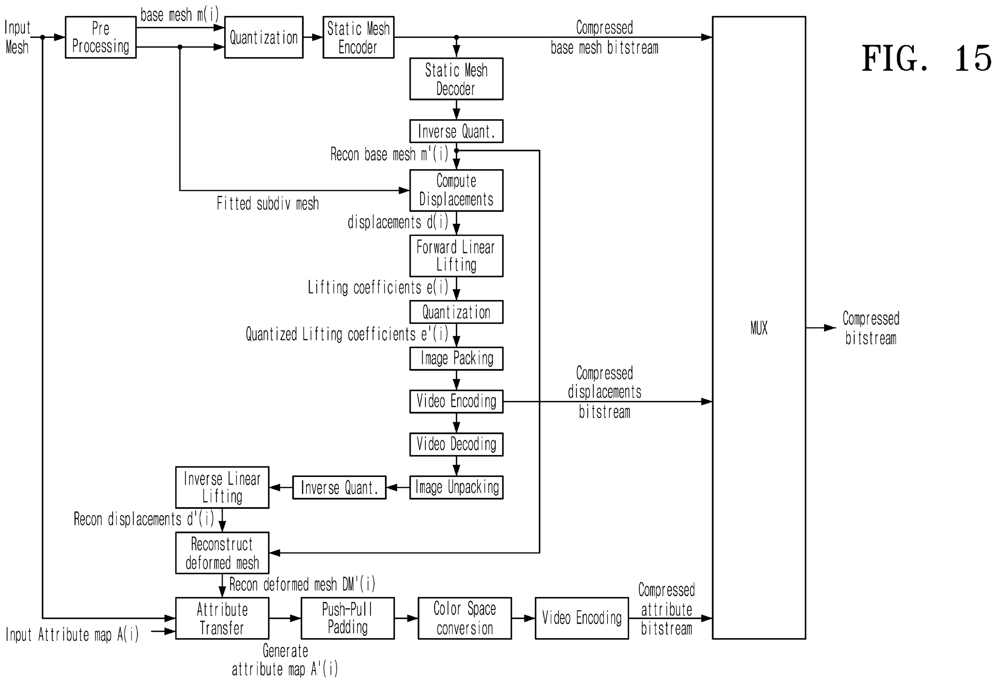

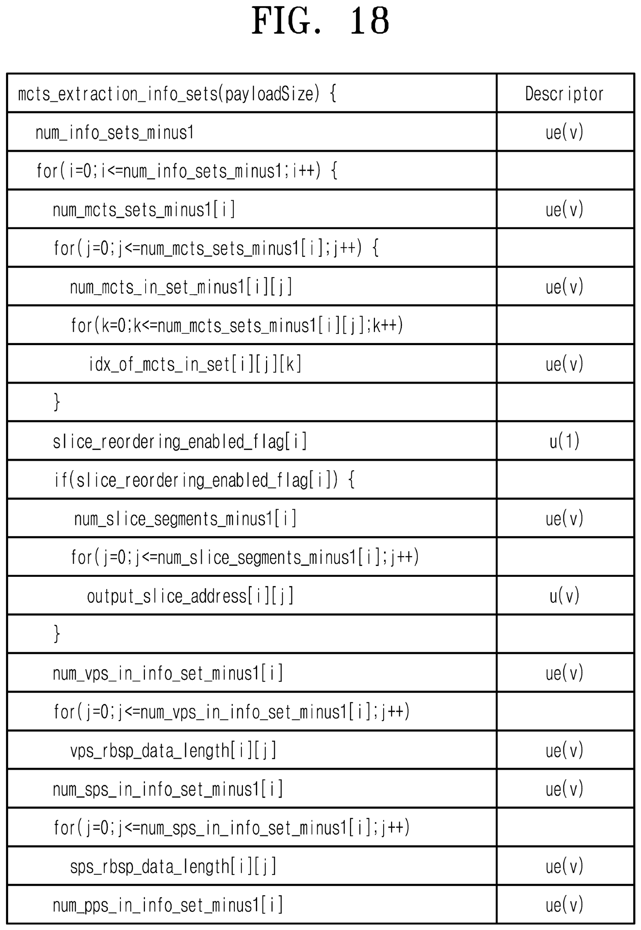

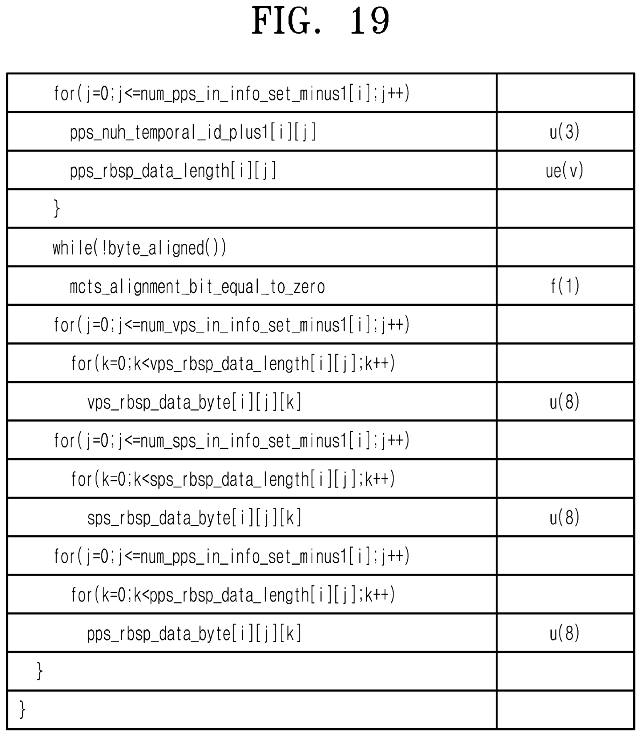

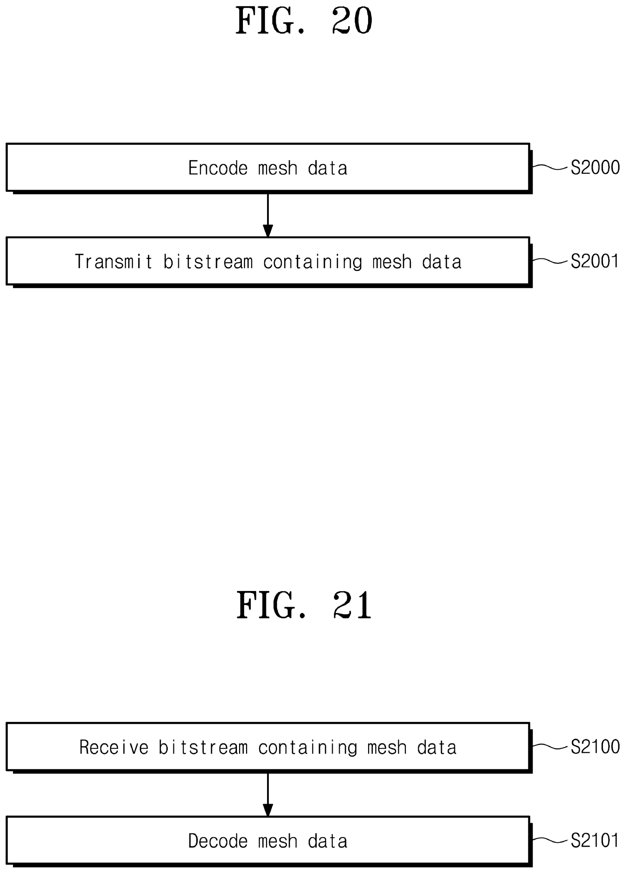

The mesh encoding method and encoder according to embodiments include and perform operations corresponding to the transmission device 100, dynamic mesh video acquisition unit 101, dynamic mesh video encoder 102, file/segment encapsulator 103, transmitter 104 of FIG. 1, the pre-processor 200, encoder 201 of FIG. 2, the encoders of FIGS. 6 and 7, the transmission device of FIG. 13, the tile-based mesh data encoding of FIGS. 15 to 17, the tile-based parameter generation of FIGS. 18 and 19, and the encoding of FIG. 20.

The mesh decoding method and decoder according to embodiments include and perform operations corresponding to the reception device 110, receiver 111, file/segment decapsulator 112, dynamic mesh video decoder 113, renderer 114 of FIG. 1, the decoders of FIGS. 11 and 12, the reception device of FIG. 14, the decoding as the inverse process of the tile-based encoding of FIGS. 15 to 17, the tile-based parameter parsing of FIGS. 18 and 19, and the decoding of FIG. 21.

According to embodiments, the method/device may include and perform a tile based geometry data packing method for scalable dynamic mesh coding. The geometry data refers to displacement information related to mesh data.

Embodiments relate to video-based dynamic mesh compression (V-Mesh), which is a method of compressing 3D dynamic mesh data using a 2D video codec. In particular, the embodiments include a scalable mesh encoding/decoding method with scalability applied by including one or more sub-bitstream sets having various resolutions and qualities. To this end, the V-Mesh method includes a method of reflecting scalability in displacement video and texture map video, which are compressed using a 2D video codec. In addition, for the displacement video, the embodiments include a method capable of improving not only scalability but also compression efficiency. The embodiments may provide layer-based encoding/decoding of mesh data, and allow mesh content having an optimal resolution and quality to be selectively reconstructed and provided through a service according to network and reception environments.

Embodiments relate to V-Mesh, which is a method of compressing 3D dynamic mesh data based on a 2D video codec. In particular, the embodiments relate to a method of partitioning and compressing displacement information and texture map information based on layers by a V-Mesh encoder, and to a method of hierarchically encoding displacement information by applying a coding method other than a 2D video format. The embodiments further relate to a method of decoding displacement information and texture map information up to a target layer by a V-Mesh decoder, and a method of decoding mesh data up to the target layer based thereon.

In this document, the term "displacement video" may also be referred to and used as "displacement vector video" or "displacement vector transform coefficient video."

FIG. 15 illustrates an encoding method for the V-Mesh compression method according to embodiments.

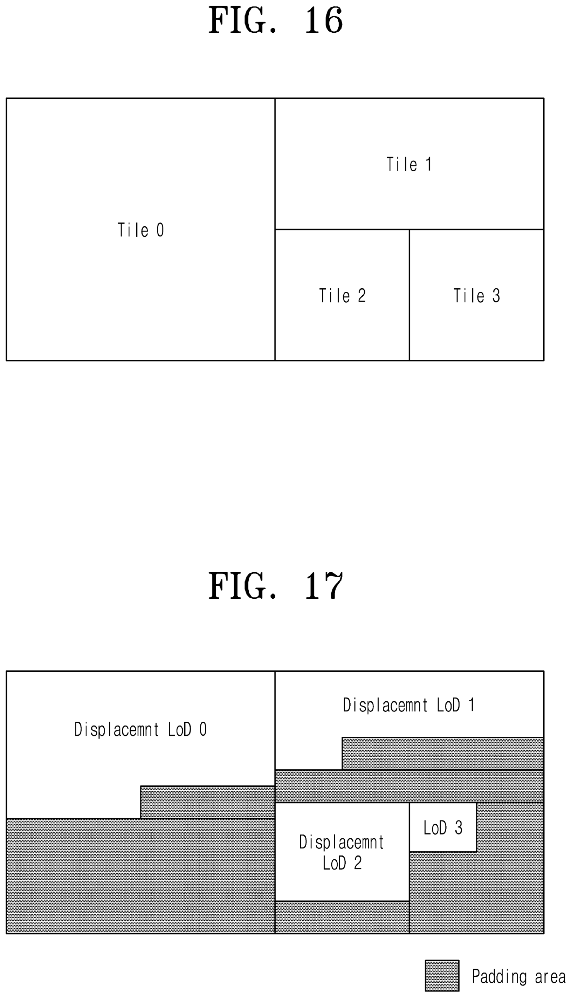

FIG. 15 shows a mesh encoding method and encoder configuration according to embodiments, illustrating the operations of the transmission device 100, dynamic mesh video acquisition unit 101, dynamic mesh video encoder 102, file/segment encapsulator 103, transmitter 104 of FIG. 1, the pre-processor 200, encoder 201 of FIG. 2, the encoders of FIGS. 6 and 7, the transmission device of FIG. 13, the tile-based mesh data encoding of FIGS. 16 and 17, the tile-based parameter generation of FIGS. 18 and 19, and the encoding of FIG. 20. Each component of FIG. 15 corresponds to hardware, software, a processor, and/or a combination thereof.

In the conventional V-Mesh method, as shown in FIG. 1, displacement information generated in the encoding process is converted into a video format and then compressed using an existing 2D video codec. In addition, texture map information (meaning the same as attribute map) relate dto input mesh data is also processed as video and compressed using the existing 2D video codec. The displacement video and the texture map video are generated and encoded based on a resolution set by the user, and are also reconstructed and utilized at the same resolution at the receiving side. However, in some cases, when the network condition on the receiving side is poor and results in loss of part of the video bitstream data, the entire video data may not be completely reconstructed with the current V-Mesh method. Further, when the available resources for the receiving terminal are insufficient to reconstruct and utilize the transmitted mesh data, the received mesh data may not be used at all. To address these issues, an efficient approach may be to transmit a bitstream through scalable encoding of mesh data, thereby allowing data to be received up to a processable level and reconstructed to the maximum possible level. Accordingly, the present disclosure proposes a scalable partial encoding/decoding method for displacement video and texture map video, enabling the V-Mesh method to support scalable partial encoding/decoding.

In the current V-Mesh method, the displacement information is processed as video and encoded. In practice, however, the displacement information included in actual video data has little spatial/temporal redundancy, and thus compression using a video codec may be inefficient. If a more efficient coding method reflecting the characteristics of the displacement information is applied, the compression performance of V-Mesh may be further improved. Accordingly, embodiments include a displacement information encoding method other than video compression, and a scalable encoding/decoding method based thereon.

In pre-processing, the encoder receives mesh data and generates a base mesh. Based on operations such as decimation, decimated base mesh data is generated from the original mesh data.

In quantization, the encoder quantizes the base mesh based on quantization parameters.

In static mesh encoding, the encoder encodes the static base mesh that does not change over time. A compressed base mesh bitstream is generated.

In static mesh decoding, the encoder reconstructs the compressed static mesh.

In inverse quantization, the encoder inversely quantizes the base mesh based on quantization parameters.

In displacement vector generation, the encoder generates displacement information (displacement vectors) from vertices of the reconstructed base mesh. Displacement information about the vertices may be generated from the reconstructed base mesh and fitted subdivided meshes.

In lifting, the encoder may generate lifting coefficients from the displacement information. Displacement vector coefficients of the displacement vectors may be generated.

In quantization, the encoder may quantize the displacement vector coefficients based on the quantization parameters.

In image packing, the encoder may pack the displacement vector coefficients into a video image. The image may be referred to as a frame.

In video encoding, the encoder may encode the video image based on a video scheme. A compressed displacement vector bitstream may be generated.

In video decoding, the encoder may decode the video image based on the video scheme.

In image unpacking, the encoder may unpack the displacement vector coefficients from the image.

In inverse quantization, the encoder inversely quantizes the displacement vector coefficients based on the quantization parameters.

In inverse transform, the encoder may reconstruct displacement vectors from the displacement vector coefficients.

The encoder may encode attribute data through attribute transfer, and may transform attributes or an attribute map related to the mesh based on the reconstructed mesh data.

The encoder may pad data within the attributes based on a push-pull scheme.

The encoder may convert attribute color information through color space conversion.

The encoder encodes the attributes based on a video encoding scheme. A compressed attribute bitstream may be generated.

The encoder may transmit a bitstream containing the encoded base mesh, displacement information, and attribute information.

The encoding operations of FIG. 15 may be performed by a processor through instructions in the memory.

FIG. 16 illustrates tiles according to embodiments.

A mesh encoding method and encoder according to embodiments (corresponding to the transmission device 100, dynamic mesh video acquisition unit 101, dynamic mesh video encoder 102, file/segment encapsulator 103, transmitter 104 of FIG. 1, the pre-processor 200, encoder 201 of FIG. 2, the encoders of FIGS. 6 and 7, the transmission device of FIG. 13, the tile-based mesh data encoding of FIG. 17, the tile-based parameter generation of FIGS. 18 and 19, and the encoding of FIG. 20) may encode mesh data using the tile structure of FIG. 16.

A mesh decoding method and decoder according to embodiments (corresponding to the reception device 110, receiver 111, file/segment decapsulator 112, dynamic mesh video decoder 113, renderer 114 of FIG. 1, the decoders of FIGS. 11 and 12, the reception device of FIG. 14, the decoding as the inverse process of the tile-based encoding of FIG. 17, the tile-based parameter parsing of FIGS. 18 and 19, and the decoding of FIG. 21) may decode mesh data using the tile structure of FIG. 16.

The tiles of FIG. 16 may be, for example, HEVC tiles. Embodiments are not limited to HEVC tiles. Regions obtained by dividing a rectangular region by vertical and horizontal lines may be referred to as tiles. The tiles may have different sizes. FIG. 16 illustrates Tile 0, Tile 1, Tile 2, and Tile 3. Based on the tiles, data included in the tiles may be compressed and reconstructed.

FIG. 17 illustrates tile-based packing of displacement information according to embodiments.

FIG. 17 illustrates the operation in which the encoder and decoder according to embodiments pack and unpack displacement information of mesh data based on the tiles of FIG. 16.

For supporting scalability functions of V-DMC, data may be packed into tiles on the basis of the HEVC tile structure as shown in FIG. 16. Displacement data may be packed into respective tiles according to LoDs as shown in FIG. 17. The texture map data is encoded for each generated LoD-specific image using SHVC.

According to embodiments, displacement data may be packed into a single frame. Thereby, the number of bitstreams may be reduced and improvement may be achieved in terms of complexity.

For example, displacement information for LoD0 may be packed into Tile0, displacement information for LoD1 into Tile1, displacement information for LoD2 into Tile2, and displacement information for LoD3 into Tile3. Displacement information may be packed into tiles, and data may be padded to remaining tile regions.

A mesh decoding method and decoder according to embodiments may decode mesh data according to the illustrated flow.

A mesh decoding device according to embodiments may include an SHVC decoder configured to decode attribute information (texture) and a single HEVC decoder configured to decode displacement information.

For example, according to embodiments, when 3D mesh image services with different resolutions is provided, four mesh image services having different resolutions may be encoded and decoded. The resolution may represent a level. A level of detail (LoD) may represent a resolution value.

The mesh image corresponding to each resolution (LoD) may include attributes (for example, texture) and geometry data (for example, displacement information).

An appropriate resolution or LoD may be selected according to the specifications of the reception device or the network connection state.

For example, when levels only up to LoD 2 are selected, the decoder selects and decodes the layers of SHVC in which attributes (texture) corresponding to LoD 0, LoD 1, and LoD 2 are encoded.

An HEVC bitstream in which the packed displacement images are encoded is partially decoded. At this time, the tiles corresponding to LoD 0, LoD 1, and LoD 2 are selected and partially decoded.

Based on the decoding result, a 3D mesh video including attribute information (texture data) and displacement information corresponding to the image quality of LoD 2 is provided as a service.

FIGS. 18 and 19 illustrate the syntax of tile-related parameter information according to embodiments.

The mesh encoding method and encoder according to embodiments (corresponding to corresponding to the transmission device 100, dynamic mesh video acquisition unit 101, dynamic mesh video encoder 102, file/segment encapsulator 103, transmitter 104 of FIG. 1, the pre-processor 200, encoder 201 of FIG. 2, the encoders of FIGS. 6 and 7, the transmission device of FIG. 13, the tile-based mesh data encoding of FIGS. 15 to 17, and the encoding of FIG. 20) generate the parameters of FIGS. 18 and 19 and transmit the same in a bitstream.

The mesh decoding method and decoder according to embodiments (corresponding to the reception device 110, receiver 111, file/segment decapsulator 112, dynamic mesh video decoder 113, renderer 114 of FIG. 1, the decoders of FIGS. 11 and 12, the reception device of FIG. 14, the decoding as the inverse process of the tile-based encoding of FIGS. 15 to 17, and the decoding of FIG. 21) decode mesh data based on the parameters of FIGS. 18 and 19 included in the bitstream.

num info sets minus1 + 1 indicates extracted information sets contained in the MCTS extracted information set SEI message.

num_mets_sets_minus1[ i ] + 1 indicates the number of MCTS sets sharing the i-th extracted information set.

num_mets_in_set_minus1[ i ][ j ] + 1 indicates the number of MCTSs in the j-th MCTS set associated with the i-th extracted information set.

idx_of_mets_in_set[ i ][ j ][ k ] indicates the MCTS index of the k-th MCTS in the j-th MCTS set associated with the i-th extracted information set.

Slice reordering_enabled_flag[ i ] equal to 1 indicates that extraction of the MCTS sub-bitstream using the i-th extracted information set includes reordering of extracted slice segments, and that the Slice_segment_address of the j-th slice segment in bitstream order is associated with any of the extracted MCTSs.

num slice_segments_minus1 [ i ] + 1 indicates the number of slice segments associated with the MCTS set of the i-th extracted information set when Slice_reordering_enabled_flag[ i ] is equal to 1.

output_slice_segment_address[ i ][ j ] indicates the slice segment address of the j-th slice segment in bitstream order associated with any MCTS set of the i-th extracted information set when Slice_reordering_enabled_flag[ i ] is equal to 1.

num_vps_in_info_set_minus1[ i ] + 1 indicates the number of alternative VPSs in the i-th extracted information set.

vps_rbsp_data_length[ i ][ j ] indicates the number of RBSP data bytes of the j-th alternative VPS in the i-th extracted information set.

num_sps_in_info_set_minus1[ i ] + 1 indicates the number of alternative SPSs in the i-th extracted information set.

num_sps_in_info_set_minus1[ i ] indicates the number of RBSP data bytes of the j-th alternative SPS in the i-th extracted information set.

num_pps_in_info_set_minus1[ i ] + 1 indicates the number of alternative PPSs in the i-th extracted information set.

num_pps_in_info_set_minus1[ i ] minus 1 indicates the temporal identifier of the j-th alternative PPS in the i-th extracted information set.

pps_rbsp_data_length[ i ][ j ] indicates the number of RBSP data bytes of the j-th alternative PPS in the i-th extracted information set.

The mesh encoding method and encoder according to embodiments (corresponding to corresponding to the transmission device 100, dynamic mesh video acquisition unit 101, dynamic mesh video encoder 102, file/segment encapsulator 103, transmitter 104 of FIG. 1, the pre-processor 200, encoder 201 of FIG. 2, the encoders of FIGS. 6 and 7, the transmission device of FIG. 13, the tile-based mesh data encoding of FIGS. 15 to 17, and the encoding of FIG. 21) generate the tile-based parameters of FIGS. 18 and 19, and transmit the same in the bitstream.

The mesh decoding method and decoder according to embodiments (corresponding to the reception device 110, receiver 111, file/segment decapsulator 112, dynamic mesh video decoder 113, renderer 114 of FIG. 1, the decoders of FIGS. 11 and 12, the reception device of FIG. 14, the decoding as the inverse process of the tile-based encoding of FIGS. 15 to 17, the tile-based parameter parsing of FIGS. 18 and 19, and the decoding of FIG. 21) may, based on the tile-based parameters of FIGS. 18 and 19, identify the mapping relationship between the tiles and displacement information in FIGS. 16 and 17 and decode displacement information per tile. For example, the tile parameters of FIGS. 18 and 19 may include the number of tiles and tile IDs. Furthermore, they may further include the level value of the level of detail for displacement information per tile ID. In addition, the tile parameters of FIGS. 18 and 19 or the bitstream may include information on the tile configuration of the current frame and/or properties that map LoD and tile IDs.

For example, in each frame header in the bitstream, or as signaling data including frame parameter sets or characteristics of a frame, the following information may further be included: the width, height of the tile, and the position of the tile within the frame may be included as tile configuration of the frame, and image characteristics, resolution, LoD indicators of tiles may be included as characteristics information for mapping LoD and tile ID.

FIG. 20 illustrates a mesh data encoding method according to embodiments.

The mesh encoding method and encoder according to embodiments (corresponding to corresponding to the transmission device 100, dynamic mesh video acquisition unit 101, dynamic mesh video encoder 102, file/segment encapsulator 103, transmitter 104 of FIG. 1, the pre-processor 200, encoder 201 of FIG. 2, the encoders of FIGS. 6 and 7, the transmission device of FIG. 13, and the tile-based mesh data encoding of FIGS. 15 to 17) may encode and transmit mesh data as illustrated in FIG. 20.

The mesh data encoding method according to the embodiments may include encoding mesh data (S2000).

The mesh data encoding method according to the embodiments may further include transmitting a bitstream containing the mesh data (S2001).

Referring to FIG. 15, operation S2000 of encoding the mesh data may include generating a base mesh of the mesh data, encoding the base mesh, reconstructing the base mesh, generating displacement information based on the reconstructed base mesh, encoding the displacement information, reconstructing the displacement information, and encoding attribute information of the mesh data based on the reconstructed displacement information.

Referring to FIG. 16, the encoding of the displacement information may include packing the displacement information into an image, wherein the image may include one or more tiles.

Referring to FIG. 17, displacement information related to a first level of detail may be packed into a first tile, and displacement information related to a second level of detail may be packed into a second tile. Data may be padded into an area remaining in the first tile after the displacement information related to the first level of detail is packed.

Referring to FIGS. 18 and 19, in operation S2001 of transmitting the bitstream, the bitstream may contain information related to a tile for packing of displacement information.

The method of FIG. 20 may be performed by a transmission device (encoder). The transmission device may include a memory and a processor configured to execute one or more instructions stored in the memory, wherein the processor may encode mesh data, and transmit a bitstream containing the mesh data.

FIG. 21 illustrates a mesh data decoding method according to embodiments.

The mesh decoding method and decoder according to embodiments (corresponding to the reception device 110, receiver 111, file/segment decapsulator 112, dynamic mesh video decoder 113, renderer 114 of FIG. 1, the decoders of FIGS. 11 and 12, the reception device of FIG. 14, the decoding as the inverse process of the tile-based encoding of FIGS. 15 to 17, and the tile-based parameter parsing of FIGS. 18 and 19) may receive a bitstream and decode mesh data as illustrated in FIG. 21.

The decoding of FIG. 21 may be a reverse process of the encoding of FIG. 20.

The mesh data decoding method according to the embodiments may include receiving a bitstream containing mesh data (S2100).

The mesh data decoding method according to the embodiments may further include decoding mesh data (S2101).

Referring to FIGS. 18 and 19, in operation S2100 of receiving the bitstream, the bitstream may contain tile information related to packing of displacement information.

Operation S2101 of decoding mesh data may include decoding a base mesh in the bitstream; decoding displacement information in the bitstream; and decoding attribute information in the bitstream.

The decoding of the displacement information may include unpacking the displacement information packed into an image, wherein the image may include one or more tiles.

Further, the decoding of the displacement information may include decoding the displacement information for a specific level included in the tile based on the information related to the tile.

The method of FIG. 21 may be performed by a reception device (decoder). The reception device may include a memory and a processor configured to execute one or more instructions stored in the memory, wherein the processor may perform operations including receiving a bitstream containing mesh data, and decoding the mesh data.

The processor may perform operations including decoding a base mesh in the bitstream, decoding displacement information in the bitstream, and decoding attribute information in the bitstream.

Therefore, according to embodiments, displacement information (such as displacement vectors and/or displacement vector coefficients) may be packed into a single frame (image), and level-specific displacement information may be packed into multiple tiles. Thereby, the size and number of bitstreams may be reduced. Further, compression efficiency may be improved. In addition, the decoder may efficiently perform partial decoding of desired data by decoding tile-specific and/or level-specific displacement information from a single frame.

The conventional V-Mesh compression method is designed such that displacement vector videos and texture map videos generated during the encoding process are compressed and reconstructed using a video codec based on the overall resolution. As a result, in cases where it is difficult to receive and utilize the entire mesh data depending on the receiver's conditions, the transmitted mesh data cannot be used. To address this issue, Embodiments include a scalable mesh decoding/partial decoding method that allows the mesh to be selectively reconstructed and utilized at the receiving side. That is, according to embodiments, by packing displacement data into a single frame, the number of bitstreams may be reduced, and processing efficiency may be improved.

The embodiments have been described in terms of a method and/or a device. The description of the method and the description of the device may complement each other.

Although embodiments have been described with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may also fall within the scope of the appended claims and their equivalents. The devices and methods may not be limited by the configurations and methods of the embodiments described above. The embodiments described above may be configured by being selectively combined with one another entirely or in part to enable various modifications. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

### [Mode for Disclosure]

Various embodiments have been described in the best mode for carrying out the disclosure.

### [Industrial Applicability]

As described above, the embodiments may be fully or partially applied to the point cloud data transmission/reception device and system.

It will be apparent to those skilled in the art that various changes or modifications may be made to the embodiments within the scope of the embodiments.

Thus, it is intended that the embodiments cover modifications/variations provided they come within the scope of the appended claims and their equivalents.

## Claims

1. A method of receiving mesh data, the method comprising:
receiving a bitstream containing mesh data; and
decoding the mesh data.

2. The method of claim 1, wherein the decoding of the mesh data comprises:
decoding a base mesh in the bitstream;
decoding displacement information in the bitstream; and
decoding attribute information in the bitstream.

3. The method of claim 2, wherein the decoding of the displacement information comprises:
unpacking the displacement information packed into an image,
wherein the image comprises one or more tiles.

4. The method of claim 3, wherein displacement information related to a first level of detail is packed in a first tile among the one or more tiles,
wherein displacement information related to a second level of detail is packed in a second tile among the one or more tiles.

5. The method of claim 4, wherein data is padded into an area remaining in the first tile after the displacement information related to the first level of detail is packed.

6. The method of claim 1, wherein the bitstream contains includes information related to a tile for packing of displacement information,
wherein displacement information related to a specific level included in the tile is decoded based on the information related to the tile.

7. A device for receiving mesh data, comprising:
a memory; and
a processor configured to execute one or more instructions in the memory,
wherein the processor performs operations comprising:
receiving a bitstream containing mesh data; and
decoding the mesh data.

8. The device of claim 7, wherein the processor operations comprising:
decoding a base mesh in the bitstream;
decoding displacement information in the bitstream; and
decoding attribute information in the bitstream.

9. A method of transmitting mesh data, the method comprising:
encoding mesh data; and
transmitting a bitstream containing the mesh data.

10. The method of claim 9, wherein the encoding of the mesh data comprises:
generating a base mesh of the mesh data;
encoding the base mesh;
reconstructing the base mesh;
generating displacement information based on the reconstructed base mesh;
encoding the displacement information;
reconstructing the displacement information; and
encoding attribute information related to the mesh data based on the reconstructed displacement information.

11. The method of claim 10, wherein the encoding of the displacement information comprises:
packing the displacement information into an image,
wherein the image comprises one or more tiles.

12. The method of claim 11, wherein displacement information related to a first level of detail is packed in a first tile among the one or more tiles,
wherein displacement information related to a second level of detail is packed in a second tile among the one or more tiles.

13. The method of claim 12, wherein data is padded into an area remaining in the first tile after the displacement information related to the first level of detail is packed.

14. The method of claim 9, wherein the bitstream contains information related to a tile for packing of displacement information.

15. A device for transmitting mesh data, comprising:
a memory; and
a processor configured to execute one or more instructions stored in the memory,
wherein the processor operations comprising:
encoding mesh data; and
transmitting a bitstream containing the mesh data.
